# EUROPEAN PATENT APPLICATION

(11) **EP 3 689 968 A1**
(43) Date of publication of application: **05.08.2020**
(21) Application number: 19157768.3
(22) Date of filing: 18.02.2019
(51) Int. Cl.: C08L 69/00, C08L 79/08, B33Y 70/00, B29C 64/40

(54) **METHOD OF SEPARATING A COPOLYCARBONATE-BASED SUPPORT STRUCTURE FROM AN ADDITIVELY MANUFACTURED ARTICLE**

(30) Priority: 29.01.2019 US 201962797983 P
(71) Applicant: SABIC Global Technologies B.V., 4612 PX Bergen op Zoom (NL)
(72) Inventor: BIHARI, Malvika, Mt. Vernon, IN 47620 (US); DATTA, Haimanti, Bangalore 562125 (IN); GALLUCCI, Robert Russell, Mt. Vernon, IN 47620 (US); LEVASALMI, Juha-Matti, Selkirk, NY 12158 (US); PRICE, Brian, Mt. Vernon, IN 47620 (US); SYBERT, Paul Dean, Mt. Vernon, IN 47620 (US)
(74) Representative: Lang, Johannes

(57) **Abstract**

An article formed by additive manufacturing includes a build structure and a support structure. The build structure includes a polyetherimide, and the support structure includes a copolycarbonate containing bisphenol isophorone carbonate units and bisphenol A carbonate units. The support structure can be partially or fully separated from the build structure by contacting the article with a dissolution medium containing one or more of toluene, xylenes, mesitylene, benzyl benzoate, carbon tetrachloride, ethanolamine, di(C₁-C₄)-alkyl phthalates, dibenzyl phthalates, and chlorobutanes.

## Description

### BACKGROUND OF THE INVENTION

Fused filament fabrication ("FFF"), also known as fused deposition modeling, is an additive manufacturing technique in which an FFF printer deposits sequential layers of a thermoplastic build material to create a three-dimensional model, also known as a build structure. During printing, each new layer must be supported by the layer beneath it. If the model to be printed requires temporary support to maintain its desired shape (e.g., for an overhang or bridge), the printing of a support structure may be needed to temporarily support the build structure until it cools sufficiently to maintain its structure without support.

In the FFF process, the build material and support material, as feedstocks, are fed to the FFF printer in filament form. These build and support material filaments are then separately heated above their solidification temperatures and extruded through separate nozzles to print the build and support structures. The support structure is subsequently separated from the build structure by physical separation, dissolution, or a combination of the two.

An ideal support material must satisfy many different and sometimes contradictory requirements, including an ability to be readily extruded to form a high-precision filament, an ability to be printed to form a support structure, and an affinity for the build material that is sufficient to enable support of the build material during printing but not so great as to interfere with physical separation of the support structure from the build structure or to damage the build structure during that separation. To print a build material with a high heat resistance, such as a polyetherimide-containing build material, an elevated printing temperature is required. Any support material used with a high heat resistance build material must be sufficiently heat resistant to provide structural support to the build material as it is printed. There remains a need for heat resistant support materials exhibiting an improved balance of these properties.

### BRIEF SUMMARY OF EMBODIMENTS OF THE INVENTION

One embodiment is a method of separating a support structure from an additively manufactured article, comprising: contacting an additively manufactured article with a dissolution medium comprising a solvent selected from the group consisting of toluene, xylenes, mesitylene, benzyl benzoate, carbon tetrachloride, ethanolamine, di(C₁-C₄)-alkyl phthalates, dibenzyl phthalates, chlorobutanes, and combinations thereof; wherein the additively manufactured article comprises a build structure and a support structure; wherein the build structure comprises a build composition comprising a polyetherimide; and wherein the support structure comprises a support composition comprising a copolycarbonate comprising bisphenol isophorone carbonate units and bisphenol A carbonate units.

This and other embodiments are described in detail below.

### DETAILED DESCRIPTION OF THE INVENTION

The terms, as used herein, have the following meanings.

The terms "a" and "an" mean one or more.

The carbon atom content of various hydrocarbon-containing moieties herein may be indicated by a prefix designating the minimum and maximum number of carbon atoms in the moiety, for example, the prefixes (Cₐ-C_{b})-alkyl, and C_{a-b}-alkyl, indicate an alkyl moiety of the integer "a" to "b" carbon atoms, inclusive. Thus, for example, (C₁-C₆)-alkyl and C₁₋₆-alkyl refer to an alkyl group of one to six carbon atoms.

A bridging group, spacer, linker, or diyl group is any part of a molecule or polymer repeating unit connected by single bonds to two other distinct atoms in the rest of the molecule or repeating unit.

The term "alkyl" denotes a saturated group containing only carbon and hydrogen. The alkyl group can be straight-chain, branched, cyclic, or a combination of at least two of the foregoing. Examples of alkyl groups include methyl, ethyl, propyl, isopropyl, butyl, isobutyl, and tertiary-butyl.

The term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted it contains heteroatoms over and above the carbon and hydrogen members of the substituent residue. Thus, when specifically described as substituted, the hydrocarbyl residue can also contain one or more carbonyl groups, amino groups, or hydroxyl groups, or it can contain heteroatoms within the backbone of the hydrocarbyl residue.

The term "alkanediyl" means a saturated divalent aliphatic group having from 1 to 10 carbon atoms, such as methylene, ethylene, propylene, butylene, pentylene, hexylene, heptylene, octylene, nonylene, decylene, and isomeric forms thereof.

The term "aryl" denotes a monovalent, monocyclic or polycyclic aromatic hydrocarbon group, for example, anthracenyl, fluorenyl, naphthyl, phenanthrenyl, or phenyl.

The term "arylene" means a diradical obtained by removing two hydrogen atoms from a monocyclic or polycyclic aromatic hydrocarbon group. Illustrative of arylene are phenylene, tolylene, xylylene, naphthylene, and diphenylene.

The term "cycloalkylene" means a monocyclic or polycyclic, cycloaliphatic divalent radical such as 1,3-cyclobutylene, 1,3-cyclopentylene, 2-methyl-1,3-cyclopentylene, 2-ethyl-1,3-cyclopentylene, 1,4-cyclohexylene, 2-methyl-1,4-cyclohexylene, 1,3-cycloheptylene, 1,4-cycloheptylene, 5-methyl-1,3-cycloheptylene, 1,3-cyclooctylene, 5-methyl-1,3-cyclooctylene, and 1,4-cyclooctylene.

"Cycloalkylidene" means a monocyclic or polycyclic cycloalkyl group linked to the remainder of the molecule via a carbon-carbon double bond. The definitions and illustrations provided herein for cycloalkyl groups apply with appropriate modification also to cycloalkylidene groups.

The term "alkoxy" refers to a monovalent group containing one to twelve carbon atoms, one oxygen atom, and a number of hydrogen atoms equal to two times the number of carbon atoms plus one. The alkoxy group is bound to the remainder of the molecule via the oxygen atom. The hydrocarbon portion of the alkoxy group can be straight-chain, branched, cyclic, or a combination of at least two of the foregoing. Examples of alkoxy groups include methoxy, ethoxy, propoxy, butoxy, and isobutoxy.

The term "cycloalkyl" denotes a monocyclic or polycyclic alkyl group. Examples of cycloalkyl groups include cyclopropyl, cyclobutyl, cyclopentyl, cyclohexyl, and cycloheptyl.

The term "halogen" or "halo" represents fluoro, chloro, bromo, or iodo.

The term "melt" means to heat an amorphous polymer above its glass transition temperature, or to heat a semicrystalline polymer above its melting point.

A unit or repeating unit means a part of a polymer whose repetition, by itself or with other repeat units in a copolymer, would produce the complete polymer chain (except for the end-groups) by linking the repeat units together successively along a chain.

The term "substituted" means that a hydrogen atom on a molecule has been replaced with a different atom or group. The atom or group replacing the hydrogen atom is denoted a substituent.

The present inventors have determined that dissolution media containing particular solvents - specifically solvents containing one or more of toluene, xylenes, mesitylene, benzyl benzoate, carbon tetrachloride, ethanolamine, di(C₁-C₄)-alkyl phthalates, dibenzyl phthalates, and chlorobutanes - are effective for separating a support structure containing a copolycarbonate with bisphenol isophorone carbonate units and bisphenol A units from a build structure containing a polyetherimide.

Thus, one embodiment is a method of separating a support structure from an additively manufactured article, comprising: contacting an additively manufactured article with a dissolution medium comprising a solvent selected from the group consisting of toluene, xylenes, mesitylene, benzyl benzoate, carbon tetrachloride, ethanolamine, di(C₁-C₄)-alkyl phthalates, dibenzyl phthalates, chlorobutanes, and combinations thereof; wherein the additively manufactured article comprises a build structure and a support structure; wherein the build structure comprises a build composition comprising a polyetherimide; and wherein the support structure comprises a support composition comprising a copolycarbonate comprising bisphenol isophorone carbonate units and bisphenol A carbonate units. Such select solvents must be able to remove the heat-resistant support structure in a reasonably short time (for example less than ten hours) while not damaging, dissolving, or distorting the build structure.

The method includes contacting an additively manufactured article with a dissolution medium. The additively manufactured article includes a build structure and a support structure, and the purpose of the dissolution medium is to separate the support structure from the build structure by partially or completely dissolving the support structure. The dissolution medium can also facilitate separation of the support medium by swelling the support medium with solvent, which in turn can make it easier to physically remove the support structure from the build structure. The dissolution medium includes a solvent selected from the group consisting of toluene, xylenes (including *ortho, meta,* and *para* isomers), mesitylene, benzyl benzoate, carbon tetrachloride, ethanolamine, di(C₁-C₄)-alkyl phthalates (including *ortho, meta,* and *para* isomers), dibenzyl phthalates (including *ortho, meta,* and *para* isomers), chlorobutanes (including 1-chlorobutane, 2-chlorobutane, 1-chloro-2-methylpropane, 2-chloro-2-methylpropane), and combinations thereof. In some embodiments, the solvent is selected from the group consisting of mesitylene, benzyl benzoate, and combinations thereof. In some embodiments, the solvent is benzyl benzoate.

The dissolution medium comprises the solvent in an amount of 98 to 100 weight percent, based on the total weight of the dissolution medium. In some embodiments, the dissolution medium comprises an anionic surfactant in addition to the solvent. Suitable anionic surfactants include, for example, (C₁₂-C₂₄)-alkyl sulfonate salts, (C₆-C₁₈)-alkyl aryl sulfonate salts, (C₁₂-C₂₄)-alkyl sulfate salts, (C₆-C₁₈)-alkyl aryl sulfate salts, (C₆-C₁₈)-alkyl aryl phosphate salts, and combinations thereof. In some embodiments, the anionic surfactant comprises a C₆-C₁₈-alkyl aryl sulfonate salt, such as sodium dodecylbenzene sulfonate. When present, the anionic surfactant can be used in an amount of 0.2 to 2 weight percent, based on the total weight of the dissolution medium. Within this range, the anionic surfactant amount can be 0.25 to 1 weight percent.

The method comprises contacting the additively manufactured article with the dissolution medium. The contacting is generally conducted for a time and at a temperature effective to dissolve the support structure in the dissolution medium, or effective to swell the support structure and facilitate its subsequent physical removal. In some embodiments, the contacting is conducted for a time of 20 minutes to 10 hours and at a temperature of 20 to 70 °C. Within the range of 20 minutes to 10 hours, the time can be 1 to 7 hours. Within the range of 20 to 70 °C, the temperature can be 30 to 70 °C. While exposed to solvent the conjoined build and support structures may be stirred, sonicated, or agitated using any standard process to a facilitate separation. For example, mechanical or magnetic stirring, shaking, tumbling, sonication or any combination thereof may be used. In other instances, solvent may be continuously poured over the part, or a recirculating flow bath may be used to facilitate support removal. In other embodiments the part may be swirled, spun, sloshed, or repeatedly removed and immersed in the solvent. In yet other instances, a gas may be bubbled into the solvent in the presence of the additively manufactured part to increase solvent support exposure and facilitate removal. The vessel containing the additively manufactured part and solvent may further have ridges, baffles or the like to enhance turbulent solvent flow. These routes to improved mixing and renewed solvent exposure to the support material may be used separately or in any combination.

The support structure comprises a support composition comprising a copolycarbonate. The copolycarbonate comprises bisphenol isophorone carbonate units and bisphenol A carbonate units. Bisphenol isophorone carbonate units have the structure 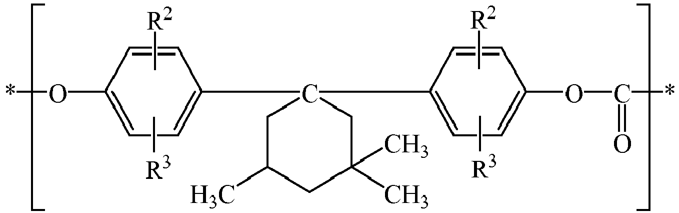 wherein R² and R³ are independently at each occurrence hydrogen or (C₁-C₁₀)-alkyl. In some embodiments, R² and R³ are hydrogen. Bisphenol A carbonate units have the structure

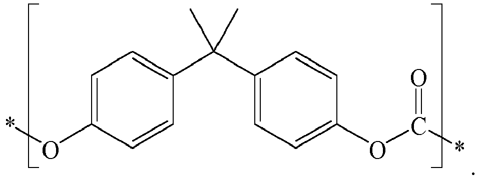

In some embodiments, the copolycarbonate comprises 40 to 80 mole percent of bisphenol isophorone carbonate units and 20 to 60 mole percent of bisphenol A carbonate units, based on 100 mole percent total of bisphenol isophorone carbonate units and bisphenol A carbonate units. Within the range of 40 to 80 mole percent, the content of bisphenol isophorone carbonate units can be 50 to 70 mole percent. Within the range of 20 to 60 mole percent, the content of bisphenol A carbonate units can be 30 to 50 mole percent. In some embodiments, the copolycarbonate comprises 50 to 65 mole percent bisphenol isophorone carbonate units, and 35 to 50 mole percent bisphenol A carbonate units.

The copolycarbonate can, optionally, incorporate a branching agent to increase its viscosity. Branching agents include, for example, trimellitic acid, trimellitic anhydride, trimellitic trichloride, 1,1,1-tris(p-hydroxyphenyl)ethane (THPE), 1,3,5-tris(2-(p-hydroxyphenyl)-prop-2-yl)benzene, 4-[2-[4-[1,1-bis(4-hydroxyphenyl)ethyl]phenyl]propan-2-yl]phenol, 4-chloroformyl phthalic anhydride, trimesic acid, benzophenone tetracarboxylic acid, and combinations thereof. The copolycarbonate can, optionally, incorporate the residue of an endcapping agent, which is used to control the molecular weight of the copolycarbonate. Endcapping agents include, for example, phenol, *para*-cumylphenol, *para*-*tert*-butylphenol, and *para*-octylphenol. Monofunctional acids and acid chlorides can also be used as endcapping agents.

Copolycarbonates are known, and methods for their synthesis are described, for example in International Patent Application Publication No. WO 2017/191050 A1 of Hungerland et al., published 9 November 2017. Copolycarbonates are also commercially available as, for example, APEC™ high-heat polycarbonate resins from Covestro.

The support composition comprises the copolycarbonate in an amount of 30 to 100 weight percent, based on the total weight of the support composition. Within this range, the copolycarbonate amount can be 40 to 100 weight percent.

In addition to the copolycarbonate, the support composition can, optionally, further comprise a bisphenol A polycarbonate. A bisphenol A polycarbonate is a polymer comprising bisphenol A carbonate units having the structure 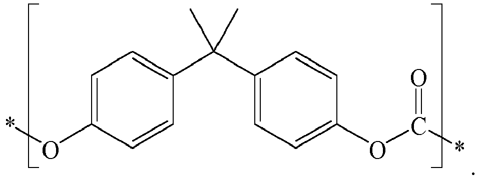 The bisphenol A polycarbonate can be linear or branched, or a combination of linear and branched bisphenol A polycarbonates can be used. In some embodiments, the support composition comprises 55 to 80 weight percent of the copolycarbonate and 20 to 45 weight percent of the bisphenol A polycarbonate, based on the total weight of the support composition.

In addition to the copolycarbonate, the support composition can, optionally, further comprise a silicone having a kinematic viscosity of 300,000 to 100,000,000 centistokes at 25° C. Within this range, the kinematic viscosity can be 600,000 to 20,000,000 centistokes, or 600,000 to 12,000,000 centistokes. Silicones, also known as polydiorganosiloxanes or polysiloxanes, are polymers having alternating silicon and oxygen atoms in the skeletal structure, and containing silicon-bonded hydrocarbon radicals, the hydrocarbon radicals being attached to the silicon atoms through carbon-silicon bonds. The silicones comprise units of the general formula RᵣSiO_{(4-r/2)}, wherein r is 0, 1, 2 or 3, provided that the average numerical value of r is from 1.9 to 2.1, and wherein each R is independently hydrogen, hydroxyl, or a substituted or unsubstituted hydrocarbon radical such as, for example, a (C₁-C₁₂)-alkyl radical (e.g., methyl, ethyl, propyl, cyclohexyl); an aryl radical (e.g., phenyl, naphthyl); an alkaryl radical (e.g., tolyl, xylyl); an aralkyl radicals (e.g., benzyl, phenylethyl); a (C₁-C₁₂)-alkoxyl radical; or a heterocyclic radical. The hydrocarbon radical can, optionally, be substituted with one or more halogen atoms. Methods of preparing high-viscosity silicones are described, for example, in U.S. Patent Nos. 7,250,127 to Geck et al., issued 31 July 2007; and 7,897,666 to Berg, issued 1 March 2011. Suitable silicones are also commercially available as, for example, GENIOPLAST™ Gum, GENIOPLAST™ Pellet S, and GENIOPLAST™ Pellet P, all from Wacker Chemie AG. When present, the silicone can be used in an amount of 0.5 to 4.5 weight percent, based on the total weight of the support composition. Within this range, the silicone amount can be 1 to 3 weight percent. Note that these silicone amounts do account for any inorganic filler, such as fused, fumed, or precipitated silica, that may be present in commercially available high-viscosity silicones.

In some embodiments, the support composition comprises, based on the total weight of the support composition, 55 to 79.5 weight percent of the copolycarbonate, 20 to 45 weight percent of a bisphenol A polycarbonate, and 0.5 to 4.5 weight percent of a silicone having a kinematic viscosity of 600,000 to 20,000,000 centistokes at 25° C. In some of these embodiments, the bisphenol A polycarbonate comprises a linear bisphenol A polycarbonate and a branched bisphenol A polycarbonate.

The build structure comprises a build composition comprising a polyetherimide. A polyetherimide is a polymer comprising etherimide units having the formula 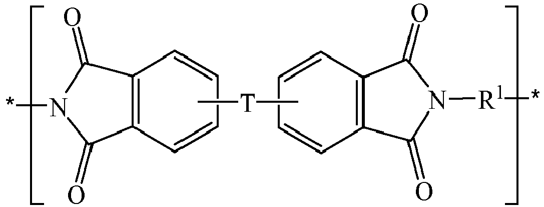 wherein T is -O- or a group of the Formula -O-Z-O- wherein the divalent bonds of the -O- or the -O-Z-O- group are in the 3,3', 3,4', 4,3', or the 4,4' positions of the phthalimide groups; Z includes divalent moieties of the formula 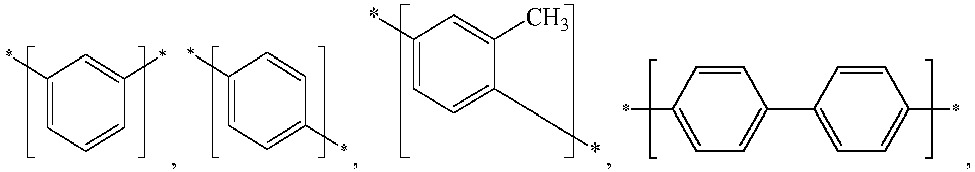 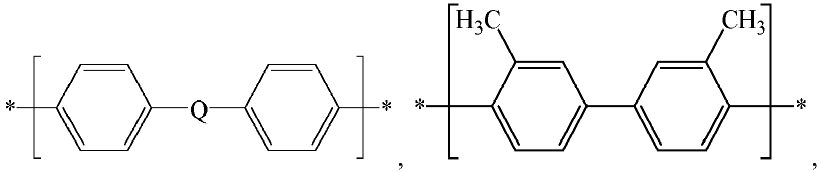 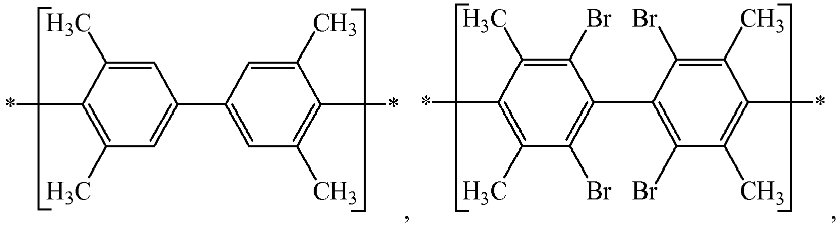 and 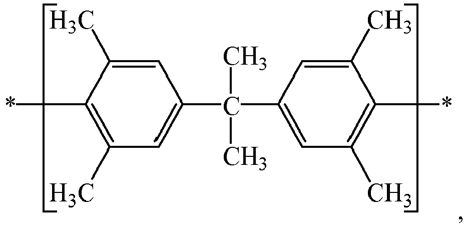 wherein Q is a divalent moiety that can be -O-, -S-, -C(O)-, -SO₂-, -SO-, -C_{y}H_{2y}- wherein y is 1 to 8, or -CₚH_{q}Fᵣ- wherein p is 1 to 8 and q is 0 to 15 and r is 1 to 16 and q + r = 2p; and R¹ is independently at each occurrence a divalent group selected from the group consisting of substituted or unsubstituted divalent aromatic hydrocarbon moieties having 6 to 20 carbons, straight or branched chain alkylene moieties having 2 to 20 carbons, cycloalkylene moieties having 3 to 20 carbon atom, and divalent moieties of the general formula 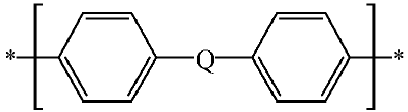 wherein Q is defined above. In this context, "substituted" means including at least one substituent such as a halogen (i.e., F, Cl, Br, I), hydroxyl, amino, thiol, carboxyl, carboxylate, amide, nitrile, sulfide, disulfide, nitro, C₁-C₁₈ alkyl, C₁-C₁₈ alkoxyl, C₆-C₁₈ aryl, C₆-C₁₈ aryloxyl, C₇-C₁₈ alkylaryl, or C₇-C₁₈alkylaryloxyl. In some embodiments, the polyetherimide is free of halogens.

In some embodiments, the polyetherimide comprises etherimide units having the structure 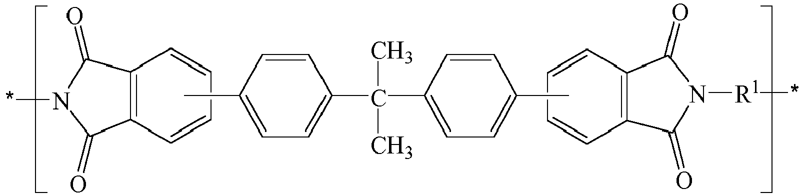 wherein R¹ is independently at each occurrence meta-phenylene or *para*-phenylene. In some embodiments, the polyetherimide comprises poly[2,2-*bis*(4-(3,4-dicarboxyphenoxy)phenyl)propane)-1,3-phenylene bisimide]. The number of etherimide units in the polyetherimide can be, for example, 10 to 1,000, or 20 to 500.

The build composition comprises the polyetherimide in an amount of 30 to 100 weight percent, based on the total weight of the build composition. Within this range, the polyetherimide amount can be 40 to 100 weight percent.

In addition to the polyetherimide, the build composition can, optionally, further comprise a polyestercarbonate. The polyestercarbonate can be a random copolymer or a block copolymer. In some embodiments, the polyestercarbonate is a block copolymer and is referred to as a block polyestercarbonate. The polyestercarbonate comprises resorcinol ester units having the structure 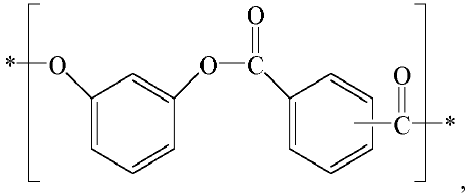 and carbonate units having the structure 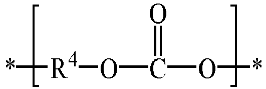 wherein at least 60 mole percent of the total number of R⁴ groups are aromatic divalent groups. In some embodiments, the polyestercarbonate is a block polyestercarbonate comprising multiple polyester blocks and multiple polycarbonate blocks. In some embodiments, the aromatic divalent groups are C₆-C₂₄ aromatic divalent groups. When not all R⁴ groups are aromatic, the remainder are C₂-C₂₄ aliphatic divalent groups. In some embodiments, each R⁴ is a radical of the formula

∗ -[-A¹-Y¹-A²-]-∗

wherein each of A¹ and A² is independently a monocyclic divalent aryl radical and Y¹ is a bridging radical having one or two atoms separating A¹ from A². In some embodiments, one atom separates A¹ from A². Illustrative examples of radicals of this type are -O-, -S-, -S(O)-,-S(O)₂-, -C(O)-, methylene, cyclohexylmethylene, 2-[2.2.1]-bicycloheptylidene, ethylidene, isopropylidene, neopentylidene, cyclohexylidene, cyclopentadecylidene, cyclododecylidene, and adamantylidene. The bridging radical Y¹ can be a C₁-C₁₂ (divalent) hydrocarbylene group. Specific examples of Y¹ include methylene (-CH₂-; also known as methylidene), ethylidene (-CH(CH₃)-), isopropylidene (-C(CH₃)₂-), and cyclohexylidene.

In some embodiments, the polyestercarbonate comprises resorcinol ester units having the structures 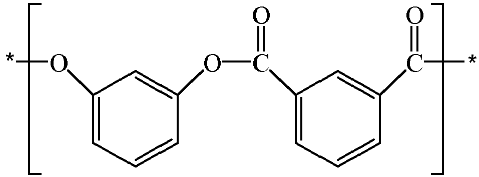 and 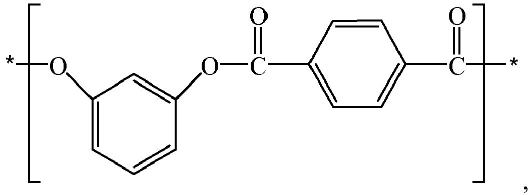 and bisphenol A carbonate units having the structure

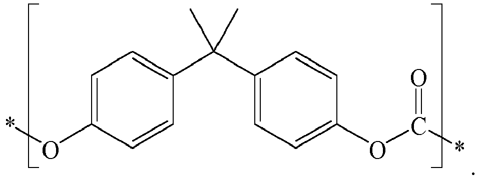

In some embodiments, the polyestercarbonate comprises, based on the total moles of ester units and carbonate units in the polyestercarbonate, 5 to 95 mole percent of ester units, and 5 to 95 mole percent of carbonate units. Within these ranges, the mole percent of ester units can be 50 to 90, and the mole percent of carbonate units can be 10 to 50 mole percent; or the mole percent of ester units can be 70 to 90, and the mole percent of carbonate units can be 10 to 30 mole percent. In a very specific embodiment, the polyestercarbonate is a block polyestercarbonate comprising 70 to 90 mole percent of resorcinol isophthalate/terephthalate ester units, 5 to 15 mole percent of resorcinol carbonate units, and 5 to 15 mole percent of bisphenol A carbonate units. Methods of making block polyestercarbonates are known and include those disclosed in U.S. Patent No. 7,790,292 B2 to Colborn et al.

When the build composition comprises a polyestercarbonate, it can be present in an amount of 25 to 65 weight percent, based on the total weight of the build composition. Within this range, the polyestercarbonate amount can be 30 to 60 weight percent. Thus, in some embodiments, the build composition comprises, based on the total weight of the build composition, 40 to 70 weight percent of the polyetherimide and further 30 to 60 weight percent of the polyestercarbonate.

Another optional component of the build composition is a polycarbonate-polysiloxane. A polycarbonate-polysiloxane is a polymer comprising carbonate repeat units and siloxane repeat units. When the carbonate repeat units are in the form of one or more polycarbonate blocks, and the siloxane repeat units are in the form of one or more polysiloxane blocks, the polycarbonate-polysiloxane is termed a block polycarbonate-polysiloxane. In some embodiments, the block polycarbonate-polysiloxane comprises multiple polycarbonate blocks and multiple polysiloxane blocks. The polycarbonate-polysiloxane can be transparent, translucent, or opaque, depending on its composition. In some embodiments, the resorcinol-based polyestercarbonate and polyetherimide are miscible, and the build composition exhibits a single glass transition temperature.

The carbonate units can have the structure 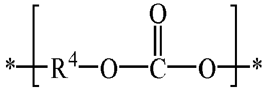 wherein at least 60 mole percent of the total number of R⁴ groups are aromatic divalent groups. In some embodiments, the aromatic divalent groups are C₆-C₂₄ aromatic divalent groups. When not all R⁴ groups are aromatic, the remainder are C₂-C₂₄ aliphatic divalent groups. In some embodiments, each R⁴ is a radical of the formula

∗ -[-A¹-Y¹-A²-]-∗

wherein each of A¹ and A² is independently a monocyclic divalent aryl radical and Y¹ is a bridging radical having one or two atoms that separate A¹ from A². In some embodiments, one atom separates A¹ from A². Illustrative examples of radicals of this type are -O-, -S-, -S(O)-,-S(O)₂-, -C(O)-, methylene, cyclohexylmethylene, 2-[2.2.1]-bicycloheptylidene, ethylidene, isopropylidene, neopentylidene, cyclohexylidene, cyclopentadecylidene, cyclododecylidene, and adamantylidene. The bridging radical Y¹ can be a C₁-C₁₂ (divalent) hydrocarbylene group. Specific examples of Y¹ include methylene (-CH₂-; also known as methylidene), ethylidene (-CH(CH₃)-), isopropylidene (-C(CH₃)₂-), and cyclohexylidene.

The siloxane units can have the structure 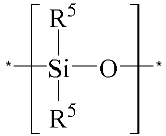 wherein each occurrence of R⁵ is independently (C₁-C₁₃)-hydrocarbyl. Examples of R⁵ groups include (C₁-C₁₃)-alkyl (including alkyl groups that are linear, branched, cyclic, or a combination of at least two of the foregoing), (C₂-C₁₃)-alkenyl, (C₆-C₁₂)-aryl, (C₇-C₁₃)-arylalkyl, and (C₇-C₁₃)-alkylaryl. The foregoing hydrocarbyl groups can, optionally, be fully or partially halogenated with fluorine, chlorine, bromine, iodine, or a combination of at least two of the foregoing. In some embodiments, each occurrence of R⁵ is halogen-free. In some embodiments, each occurrence of R⁵ is methyl.

In some embodiments, the siloxane units are in the form of one or more polysiloxane blocks having the structure 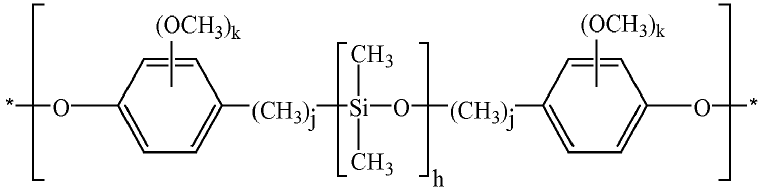 wherein h is, on average, 10 to 100, or 20 to 80; each occurrence of j is independently 1 to 10, or 2 to 6; and each occurrence of k is 0 or 1.

The polycarbonate-polysiloxane comprises 50 to 95 weight percent carbonate units and 5 to 50 weight percent siloxane units, based on the total weight of the polycarbonate-polysiloxane. Within the range of 50 to 95 weight percent, the content of carbonate units can be 60 to 90 weight percent. Within the range of 5 to 50 weight percent, the content of siloxane units can be 10 to 40 weight percent. Block polycarbonate-polysiloxanes and methods for their preparation are known and described, for example, in U.S. Pat. Nos. 3,419,634 and 3,419,635 to Vaughn, U.S. Pat. No. 3,821,325 to Merritt et al., U.S. Pat. No. 3,832,419 to Merritt, and U.S. Pat. No. 6,072,011 to Hoover.

When the polycarbonate-polysiloxane is a block polycarbonate-polysiloxane, weight percent polysiloxane accounts for the full weight of the polysiloxane macromer used to prepare the block polycarbonate-polysiloxane. For example, if the polysiloxane blocks are derived from a eugenol-endcapped or phenoxypropyl-endcapped polydimethylsiloxane macromer having, on average, about 45 dimethylsiloxane units per molecule, and if the block polycarbonate-polysiloxane is characterized as having a polysiloxane content of about 20 weight percent, then the block polycarbonate-polysiloxane has, based on the weight of the block polyestercarbonate-polysiloxane, about 20 weight percent of polysiloxane units having, on average, the formula 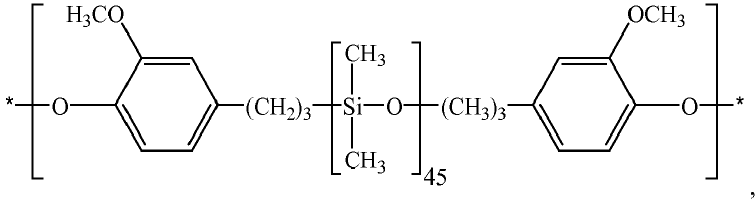 or

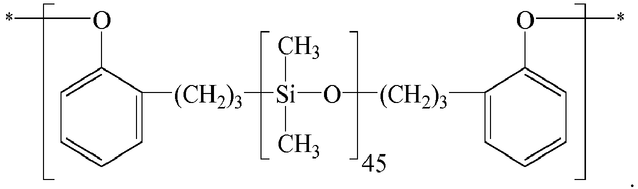

When the build composition comprises a polycarbonate-polysiloxane, it can be present in an amount of 3 to 30 weight percent, based on the total weight of the build composition. Within this range, the polycarbonate-polysiloxane content can be 5 to 20 weight percent. In some embodiments, the build composition comprises, based on the total weight of the build composition, 40 to 65 weight percent of a polyetherimide, 30 to 50 weight percent of a polyestercarbonate, and 5 to 20 weight percent of a polycarbonate-polysiloxane.

Another optional component of the build composition is a polyestercarbonate-polysiloxane. A polyestercarbonate-polysiloxane is a copolymer comprising at least one polyester block, at least one polycarbonate block, and at least one polysiloxane block. In some embodiments, the block polyestercarbonate-polysiloxane comprises multiple polyester blocks, multiple polycarbonate blocks, and multiple polysiloxane blocks. The at least one polyester block comprises resorcinol ester units having the structure 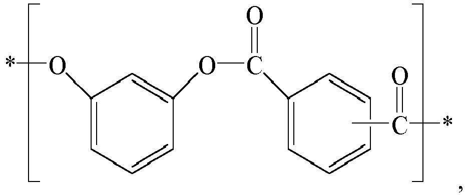 at least one polycarbonate block comprising carbonate units having the structure 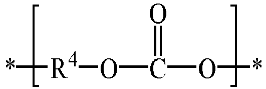 wherein at least 60 mole percent of the total number of R⁴ groups are aromatic divalent groups, and at least one polysiloxane block comprising diorganosiloxane units of the formula 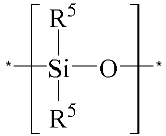 wherein each occurrence of R⁵ is independently (C₁-C₁₃)-hydrocarbyl. In some embodiments, the resorcinol ester units comprise resorcinol isophthalate/terephthalate units, and the carbonate units comprise resorcinol carbonate units and bisphenol A carbonate units. In some embodiments, the at least one polysiloxane block has the structure 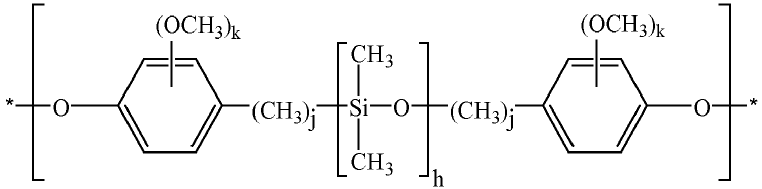 wherein h is, on average, 10 to 100, or 20 to 80; each occurrence of j is independently 1 to 10, or 2 to 6; and each occurrence of k is 0 or 1. In a specific embodiment, the block polyestercarbonate-polysiloxane comprises, based on total moles of carbonate units and ester units, 70 to 90 mole percent of resorcinol isophthalate/terephthalate units, 5 to 15 mole percent of resorcinol carbonate units, and 5 to 15 mole percent of bisphenol A carbonate units, and further comprises, based on the total weight of the block polyestercarbonate-polysiloxane, 0.2 to 4 weight percent, or 1 to 3 weight percent of polysiloxane blocks having the structure 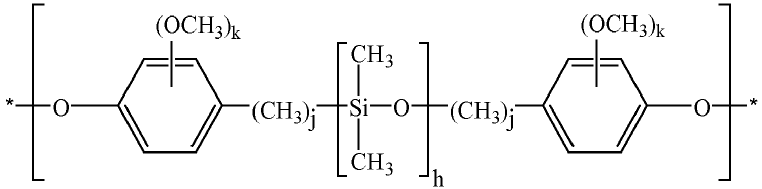 wherein h is, on average, 10 to 100, or 20 to 80; each occurrence of j is independently 1 to 10, or 2 to 6; and each occurrence of k is 0 or 1.

For the block polyestercarbonate-polysiloxane, weight percent polysiloxane accounts for the weight of the polysiloxane macromer used to prepare the block polyestercarbonate-polysiloxane. For example, if the polysiloxane blocks are derived from a eugenol-endcapped or phenoxypropyl-endcapped polydimethylsiloxane macromer having, on average, about 45 dimethylsiloxane units per molecule, and if the block polyestercarbonate-polysiloxane is characterized as having a polysiloxane content of about 20 weight percent, then the block polyestercarbonate-polysiloxane has, based on the weight of the block polyestercarbonate-polysiloxane, about 20 weight percent of polysiloxane units having, on average, the formula 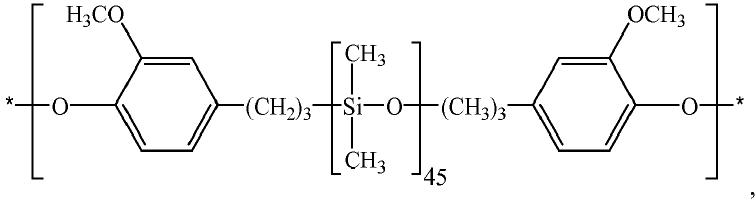 or

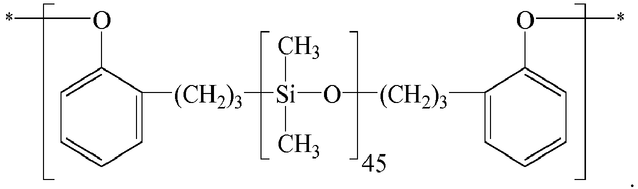

Methods for the preparation of block polyestercarbonate-polysiloxanes are known and described, for example, in U.S. Patent No. 7,790,292 B2 to Colborn et al.

When the build composition comprises a block polyestercarbonate-polysiloxane, it can be present in an amount of 1 to 15 weight percent, based on the total weight of the build composition. Within this range, the block polyestercarbonate-polysiloxane content can be 2 to 10 weight percent.

Another optional component of the build composition is a polyetherimide-polysiloxane. A polyetherimide-polysiloxane is a copolymer comprising at least one polyetherimide block and at least one polysiloxane block. In some embodiments, the block polyetherimide-polysiloxane comprises multiple polyetherimide blocks and multiple polysiloxane blocks.

The at least one polyetherimide block comprises etherimide units having the formula 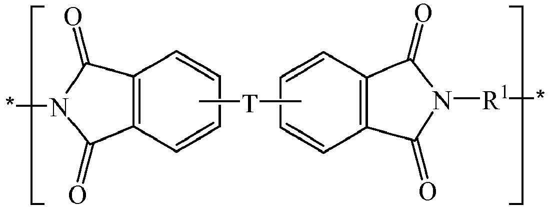 wherein T is -O- or a group of the Formula -O-Z-O- wherein the divalent bonds of the -O- or the -O-Z-O- group are in the 3,3', 3,4', 4,3', or the 4,4' positions of the phthalimide groups; Z includes divalent moieties of the formula 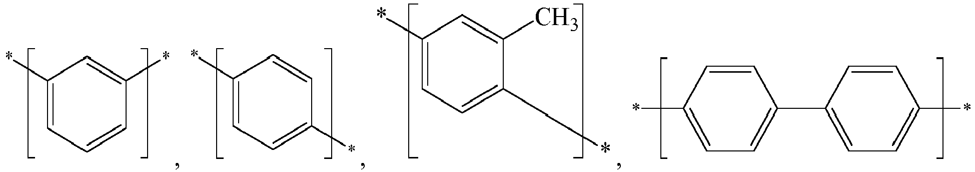 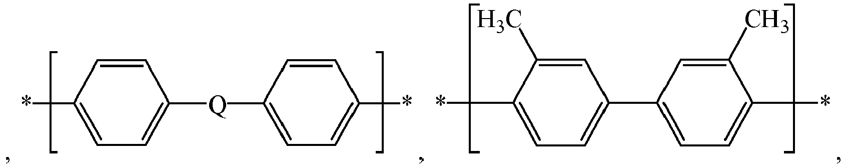 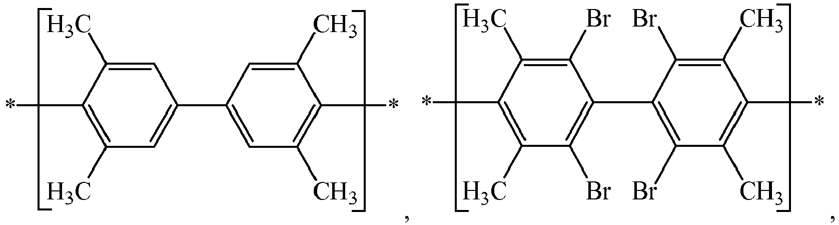 and 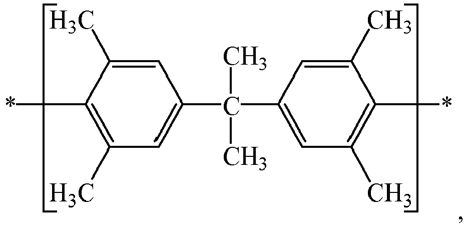 wherein Q is a divalent moiety that can be -O-, -S-, -C(O)-, -SO₂-, -SO-, -C_{y}H_{2y}- wherein y is 1 to 8, or -CₚH_{q}Fᵣ- wherein p is 1 to 8 and q is 0 to 15 and r is 1 to 16 and q + r = 2p; and R¹ is independently at each occurrence a divalent group selected from the group consisting of substituted or unsubstituted divalent aromatic hydrocarbon moieties having 6 to 20 carbons, straight or branched chain alkylene moieties having 2 to 20 carbons, cycloalkylene moieties having 3 to 20 carbon atom, and divalent moieties of the general formula 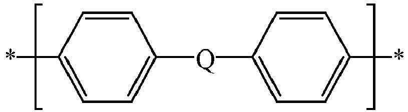 wherein Q is defined above. As used herein, "substituted" means including at least one substituent such as a halogen (i.e., F, Cl, Br, I), hydroxyl, amino, thiol, carboxyl, carboxylate, amide, nitrile, sulfide, disulfide, nitro, C₁-C₁₈ alkyl, C₁-C₁₈ alkoxyl, C₆-C₁₈ aryl, C₆-C₁₈ aryloxyl, C₇-C₁₈ alkylaryl, or C₇-C₁₈alkylaryloxyl. So, when the hydrocarbyl residue is described as substituted, it can contain heteroatoms in addition to carbon and hydrogen. In some embodiments, the at least one polyetherimide block comprises etherimide units having the structure 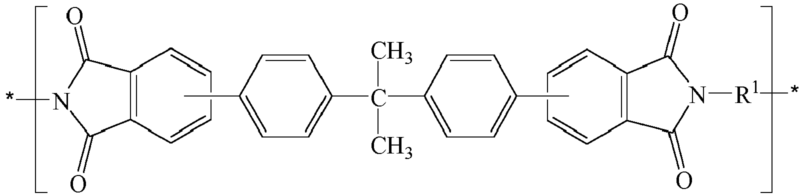 wherein R¹ is meta-phenylene or para-phenylene.

The at least one polysiloxane block of the polyetherimide-polysiloxane comprises diorganosiloxane units of the formula 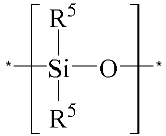 wherein each occurrence of R⁵ is independently (C₁-C₁₃)-hydrocarbyl. In some embodiments, the at least one polysiloxane block comprises 2 to 100 diorganosiloxane units. Within this range, the number of diorganosiloxane units can be 2 to 50, or 5 to 20.

In some embodiments, the at least one polyetherimide block comprises etherimide units having the structure 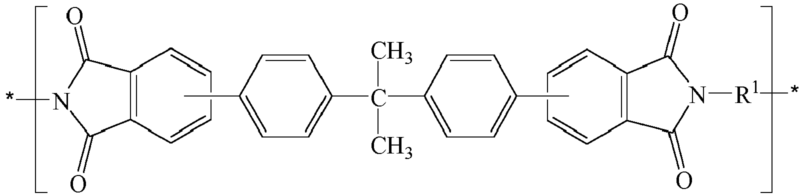 wherein R¹ is meta-phenylene or para-phenylene, and the at least one polysiloxane block comprises dimethylsiloxane units. Methods of forming block polyetherimide-polysiloxanes are known and described, for example, in U.S. Patent Application Publication No. US 2008/0223602 A1 of Gallucci et al., and U.S. Patent Nos. 4,404,350 to Ryang, 4,808,686 and 4,690,997 to Cella et al., and 8,013,251 to Bhandari et al. Block polyetherimide-polysiloxanes are also commercially available as, for example, SILTEM™ Resins STM1500, STM1600, and STM1700 from SABIC.

When the build composition comprises a block polyetherimide-polysiloxane, it can be present in an amount of 0.5 to 10 weight percent, based on the total weight of the build composition. Within this range, the block polyetherimide-polysiloxane content can be 1 to 6 weight percent.

In some embodiments, the support composition has a glass transition temperature of 165 to 200 °C, determined by differential scanning calorimetry at a heating rate of 20 °C per minute according to ASTM D3418-15.

In some embodiments, the support composition has a support glass transition temperature, the build composition has a build glass transition temperature, and the support glass transition temperature and build glass transition temperature differ by no more than 30 °C.

In a very specific embodiment of the method, the solvent is selected from the group consisting of mesitylene, benzyl benzoate, and combinations thereof; the dissolution medium further comprises 0.2 to 2 weight percent of an anionic surfactant, based on the total weight of the dissolution medium; contacting the additively manufactured article with the dissolution medium is conducted for a time of 20 minutes to 10 hours and at a temperature of 20 to 70 °C; the copolycarbonate comprises 50 to 65 mole percent bisphenol isophorone carbonate units, and 35 to 50 mole percent bisphenol A carbonate units, based on 100 mole percent total bisphenol isophorone carbonate units and bisphenol A carbonate units; the support composition comprises, based on the total weight of the support composition, 55 to 79.5 weight percent of the copolycarbonate and further comprises 20 to 45 weight percent of a bisphenol A polycarbonate and 0.5 to 4.5 weight percent of a silicone having a kinematic viscosity of 600,000 to 20,000,000 centistokes at 25° C; and the build composition comprises, based on the total weight of the build composition, 40 to 70 weight percent of the polyetherimide and further comprises 30 to 60 weight percent of a polyestercarbonate.

All ranges disclosed herein are inclusive of the endpoints, and the endpoints are independently combinable with each other. Each range disclosed herein constitutes a disclosure of any point or sub-range lying within the disclosed range.

The invention is further illustrated by the following non-limiting examples.

### EXAMPLES

Components used to prepare filaments are summarized in Table 1.

**Table 1**

| Component | Description |
|---|---|
| BPI/BPA PC | Copolycarbonate containing 55-60 mole percent bisphenol isophorone carbonate units and 40-45 mole percent bisphenol A carbonate units, having a glass transition temperature of about 205 °C, a melt volume flow rate of 8 cm³/10 minutes determined at 330 °C and 2.16 kilogram load, and a Vicat B softening temperature of 202 °C determined at 50 Newtons load and a heating rate of 120 °C/hour; obtained in UV stabilized form as APEC™ 2097 resin from Covestro. |
| BPA PC 1 | *para*-Cumylphenol end-capped linear bisphenol A polycarbonate, having a weight average molecular weight of about 36,500 grams/mole and a dispersity of about 2.5 as determined by gel permeation chromatography using bisphenol A polycarbonate standards. |
| BPA PC 2 | *para*-Cumylphenol endcapped bisphenol A polycarbonate incorporating the branching agent 1,1,1-tris(4-hydroxyphenyl)ethane (THPE), and having 0.4 mole percent branching and a weight average molecular weight of about 37,000 grams/mole determined by gel permeation chromatography using bisphenol A polycarbonate standards. |
| PC-Si | *para*-Cumylphenol endcapped polycarbonate-polysiloxane with polycarbonate blocks containing bisphenol A carbonate units and polysiloxane blocks derived from a eugenol-dicapped polydimethylsiloxane macromer having an average of about 45 dimethylsiloxane units per molecule; the polycarbonate-polysiloxane having a polycarbonate content of about 80 weight percent, and a polysiloxane content of about 20 weight percent, based on the weight of the polycarbonate-polysiloxane; and the polycarbonate-polysiloxane having a weight average molecular weight of 28,000-32,000 grams/mole; preparable according to the procedure of paragraphs [0061] to [0064] of International Patent Application Publication No. WO 2017/019969 A1 of Hoover et al. |
| PCE | *para*-Cumylphenol endcapped polyestercarbonate with polyester blocks containing 1,3-phenylene isophthalate-*co*-terephthalate units and carbonate blocks containing bisphenol A carbonate units and resorcinol carbonate units; the polyestercarbonate having, based on total moles of ester units and carbonate units, about 82 mole percent 1,3-phenylene isophthalate-*co*-terephthalate units, about 9 mole percent resorcinol carbonate units, and about 9 mole percent bisphenol A carbonate units; and the polyestercarbonate having a weight average molecular weight of about 20,000 grams/mole; preparable according to the procedure of Comparative Example 2-4 of U.S. Patent No. 7,790,292 B2 to Colborn. |
| PEI | Poly[2,2-*bis*(4-(3,4-dicarboxyphenoxy)phenyl)propane)-1,3-phenylene bisimide] having a melt flow rate of 7-11 grams/10 minutes measured at 337 °C and 6.6 kilogram force according to ASTM D1238-13; obtained as ULTEM™ 1000 resin from SABIC. |
| PEI-Si | Block polyetherimide-polysiloxane formed by imidization of the reaction product of *meta*-phenylenediamine, 2,2-*bis*(4-(3,4-dicarboxyphenoxy)phenyl)propane dianhydride, and a 3-amino-1-propyl-capped polydimethylsiloxane macromer having an average of about 10 dimethylsiloxane units per molecule; the block polyetherimide-polysiloxane having a polyetherimide content of about 60 weight percent, and a polysiloxane content of about 40 weight percent; preparable according to the procedure for "Preparation of Polysiloxane/Polyimide Block Copolymer 1 (BC1)" on page 9 of U.S. Patent Application Publication No. US 2007/0299215 A1 of Banerjee et al, published 27 December 2007. |
| Silicone/silica | Trimethylsiloxy-endcapped poly(dimethylsiloxane-*co-*vinylmethylsiloxane) (70 weight percent) on fumed silica (30 weight percent), obtained as GENIOPLAST™ Pellet S from Wacker Chemie AG. |
| Antioxidant | Pentaerythritol tetrakis(3-(3,5-di-tert-butyl-4-hydroxyphenyl)propionate), CAS Number 6683-19-8. |
| Stabilizer | Tris(2,4-di-tert-butylphenyl)phosphite, CAS Reg. No. 31570-04-4; obtained as IRGAFOS™ 168 from BASF. |

Build structures were printed from filaments having the composition in Table 2, where component amounts are expressed in units of weight percent based on the total weight of the composition.

**Table 2**

| Component | Amount |
|---|---|
| PEI | 49.9 |
| PCE | 39.0 |
| PC-Si | 8.0 |
| PEI-Si | 3.0 |
| Stabilizer | 0.1 |

Support structures were printed from filaments having the composition in Table 3, where component amounts are expressed in units of weight percent based on the total weight of the composition.

**Table 3**

| Component | Amount |
|---|---|
| BPI/BPA PC | 68.2 |
| BPA PC 1 | 24.3 |
| BPA PC 2 | 5.0 |
| Silicone/silica | 2.0 |
| Antioxidant | 0.2 |
| Stabilizer | 0.3 |

To form each composition, components were compounded on a twin-screw extruder, and the extrudate was cooled and pelletized. The resulting resin pellets were dried in a desiccant dryer (Dri-Air; East Windsor, Connecticut, USA) for one day prior to use to extrude filament. Filament was extruded by feeding pellets of the corresponding composition through an extruder (FET, Leeds, UK) equipped with a precision melt pump. The screw for this extruder had a length to diameter ratio of 30:1, with lengths of 10D in the convey zone, 12D in the transition zone, and 8D in the metering section. For the support filament, the melt temperature was set at about 280 to 300 °C. For the build filament, the melt temperature was set at about 300 to 330 °C. The extrudate exited vertically out of a die with a 4 millimeter orifice inner diameter and a 16 millimeter length. The extrudate was stretched to form monofilament while being air cooled. The puller line speed was adjusted to achieve a final filament diameter of 1.8 millimeters. On-line diameter measurements were acquired using a dual-axis high speed and high precision scanning micrometer (Keyence; Itasca, Illinois, USA).

The support filament had a glass transition temperature (T_{g}) of 182 °C determined according to ASTM D3418-15 using a TA Instruments Q1000 Differential Scanning Calorimeter operating in a temperature range from 0 to 250 °C at a heating rate of 20 °C per minute under nitrogen flow.

Printed articles, including build and support structures, were prepared using Stratasys 400mc and 900mc printers. The build structures and support structures were concurrently printed. A T16 or T20 tip was used to print build structures, and a T16 tip was used to print support structures.

Testing was performed to determine which dissolution media would be suitable to separate the support structure from the build structure without damaging the build structure. For these experiments, each dissolution medium consisted of a single solvent. Solvents are listed in the second column of Table 4, below. For each solvent, 0.5 gram of support composition pellets and 0.5 gram of build composition pellets were added to separate containers, each with 10 grams of solvent. The resulting pellet-solvent mixtures were maintained at 50 °C with continuous magnetic stirring at 800 rotations per minute on an IKA hot plate. Observations of the effects of solvents on support composition pellets were made at 1, 4, and 8 hours. Observations of the effects of solvents on build composition pellets were made at 4 and 8 hours. Observations are summarized in Table 4.

**Table 4**

| | solvent | solid | time (h) | observations |
|---|---|---|---|---|
| Ex. 1 | mesitylene | support pellets | 1 | partially dissolved |
| | | | 4 | completely dissolved |
| | | | 8 | -- |
| | | build pellets | 4 | no effect on shape or surface |
| | | | 8 | -- |
| Ex. 2 | benzyl benzoate | support pellets | 1 | partially dissolved |
| | | | 4 | completely dissolved |
| | | | 8 | -- |
| | | build pellets | 4 | no effect on shape or surface |
| | | | 8 | -- |
| Ex. 3 | carbon tetrachloride | support pellets | 1 | partially dissolved |
| | | | 4 | mostly dissolved |
| | | | 8 | -- |
| | | build pellets | 4 | no effect on shape or surface |
| | | | 8 | -- |
| Ex. 4 | ethanolamine | support pellets | 1 | broke into small pieces |
| | | | 4 | broke into small pieces |
| | | | 8 | completely disintegrated |
| | | build pellets | 4 | -- |
| | | | 8 | no effect on shape or surface |
| Ex. 5 | dibutyl phthalate | support pellets | 1 | no dissolution observed |
| | | | 4 | no dissolution observed; cloudy solution |
| | | | 8 | mostly soluble |
| | | | 12 | completely soluble |
| | | build pellets | 4 | no effect on shape or surface |
| | | | 8 | no effect on shape or surface |
| Ex. 6 | 1-chlorobutane | support pellets | 1 | partially dissolved |
| | | | 4 | completely dissolved |
| | | | 8 | -- |
| | | build pellets | 4 | -- |
| | | | 8 | no effect on shape or surface |
| C. Ex. 1 | cyclohexylamine | support pellets | 1 | partially dissolved |
| | | | 4 | completely dissolved |
| | | | 8 | -- |
| | | build pellets | 4 | surface peeling with white residue |
| | | | 8 | -- |
| C. Ex. 2 | ethyl acetate | support pellets | 1 | partially dissolved |
| | | | 4 | completely dissolved |
| | | | 8 | -- |
| | | build pellets | 4 | surface peeling with white residue |
| | | | 8 | -- |
| C. Ex. 3 | 2-methylanisole | support pellets | 1 | partially dissolved |
| | | | 4 | completely dissolved |
| | | | 8 | -- |
| | | build pellets | 4 | sticky, swollen surface |
| | | | 8 | -- |
| C. Ex. 4 | diphenyl ether | support pellets | 1 | partially dissolved |
| | | | 4 | completely dissolved |
| | | build pellets | 4 | mild surface peeling with white residue |
| | | | 8 | -- |

Further dissolution testing was conducted to evaluate the effects of support and build structure geometries on the ability to separate support structures. The build and support structures had hard-to-reach internal cavities. The geometries and volumes are summarized in Table 5.

**Table 5**

| Printed Part | Build Volume (cm³) | Support Volume (cm³) |
|---|---|---|
| Small Pipe | 4.46 | 2.37 |
| Large Pipe | 8.93 | 6.11 |
| Sandwich Panel | 8.57 | 2.67 |
| Kneecap Part | 36.56 | 20.11 |
| Bucky Ball | 16.67 | 25.74 |

The solvents were benzyl benzoate and mesitylene. Each printed part containing build and support structures was placed in a glass beaker containing a dissolution medium that consisted of solvent (20 grams solvent per gram support structure) and the anionic surfactant sodium dodecylbenzene sulfonate (0.5 gram per 99.5 grams solvent). The beaker contents were maintained at 50 °C with continuous magnetic stirring. Printed parts were removed from the dissolution medium and evaluated after 2, 4, and 6 hours of exposure. The parts were then treated to remove residual solvent. Model parts exposed to the mesitylene-containing dissolution medium were dried for 1 day in an oven at 130 °C under vacuum. Model parts exposed to the benzyl benzoate-containing dissolution medium were rinsed in 70% isopropanol, followed by overnight drying in an oven at 100 °C under vacuum.

For each combination of printed part geometry and solvent, complete dissolution of the support structure was observed, with no change in build structure shape or weight. However, different wettability/dissolution mechanisms were observed for the two dissolution media. The mesitylene-containing dissolution medium plasticized and swelled the support structures within about 30 minutes, thereby facilitating support structure removal in 2-3 hours through a combination of dissolution and manual scraping. In contrast, the benzyl benzoate-containing dissolution medium caused surface etching of the support structures with no observed swelling, and complete support structure dissolution took 5-6 hours.

The invention includes at least the following aspects.
Aspect 1: A method of separating a support structure from an additively manufactured article, comprising: contacting an additively manufactured article with a dissolution medium comprising a solvent selected from the group consisting of toluene, xylenes, mesitylene, benzyl benzoate, carbon tetrachloride, ethanolamine, di(C₁-C₄)-alkyl phthalates, dibenzyl phthalates, chlorobutanes, and combinations thereof; wherein the additively manufactured article comprises a build structure and a support structure; wherein the build structure comprises a build composition comprising a polyetherimide; and wherein the support structure comprises a support composition comprising a copolycarbonate comprising bisphenol isophorone carbonate units and bisphenol A carbonate units.
Aspect 2: The method of aspect 1, wherein the solvent is selected from the group consisting of mesitylene, benzyl benzoate, and combinations thereof.
Aspect 3: The method of aspect 1, wherein the solvent is benzyl benzoate.
Aspect 4: The method of any one of aspects 1-3, wherein the dissolution medium further comprises 0.2 to 2 weight percent of an anionic surfactant, based on the total weight of the dissolution medium.
Aspect 5: The method of any one of aspects 1-4, wherein the contacting is conducted for a time of 20 minutes to 10 hours and at a temperature of 20 to 70 °C.
Aspect 6: The method of any one of aspects 1-5, wherein the copolycarbonate comprises 50 to 65 mole percent bisphenol isophorone carbonate units, and 35 to 50 mole percent bisphenol A carbonate units, based on 100 mole percent total bisphenol isophorone carbonate units and bisphenol A carbonate units.
Aspect 7: The method of any one of aspects 1-5, wherein the support composition comprises, based on the total weight of the support composition, 55 to 80 weight percent of the copolycarbonate and further comprises 20 to 45 weight percent of a bisphenol A polycarbonate.
Aspect 8: The method of aspect 7, wherein the bisphenol A polycarbonate comprises a linear bisphenol A polycarbonate and a branched bisphenol A polycarbonate.
Aspect 9: The method of any one of aspects 1-5, wherein the support composition comprises, based on the total weight of the support composition, 55 to 79.5 weight percent of the copolycarbonate and further comprises 20 to 45 weight percent of a bisphenol A polycarbonate and 0.5 to 4.5 weight percent of a silicone having a kinematic viscosity of 600,000 to 20,000,000 centistokes at 25° C.
Aspect 10: The method of any one of aspects 1-9, wherein the build composition comprises, based on the total weight of the build composition, 40 to 70 weight percent of the polyetherimide and further comprises 30 to 60 weight percent of a polyestercarbonate.
Aspect 11: The method of any one of aspects 1-9, wherein the build composition comprises, based on the total weight of the build composition, 40 to 65 weight percent of the polyetherimide and further comprises 30 to 50 weight percent of a polyestercarbonate and 5 to 20 weight percent of a polycarbonate-polysiloxane.
Aspect 12: The method of aspect 1, wherein the solvent is selected from the group consisting of mesitylene, benzyl benzoate, and combinations thereof; the dissolution medium further comprises 0.2 to 2 weight percent of an anionic surfactant, based on the total weight of the dissolution medium; contacting the additively manufactured article with the dissolution medium is conducted for a time of 20 minutes to 10 hours and at a temperature of 20 to 70 °C; the copolycarbonate comprises 50 to 65 mole percent bisphenol isophorone carbonate units, and 35 to 50 mole percent bisphenol A carbonate units, based on 100 mole percent total bisphenol isophorone carbonate units and bisphenol A carbonate units; the support composition comprises, based on the total weight of the support composition, 55 to 79.5 weight percent of the copolycarbonate and further comprises 20 to 45 weight percent of a bisphenol A polycarbonate and 0.5 to 4.5 weight percent of a silicone having a kinematic viscosity of 600,000 to 20,000,000 centistokes at 25° C; and the build composition comprises, based on the total weight of the build composition, 40 to 70 weight percent of the polyetherimide and further comprises 30 to 60 weight percent of a polyestercarbonate.

## Claims

1. A method of separating a support structure from an additively manufactured article, comprising:
contacting an additively manufactured article with a dissolution medium comprising a solvent selected from the group consisting of toluene, xylenes, mesitylene, benzyl benzoate, carbon tetrachloride, ethanolamine, di(C₁-C₄)-alkyl phthalates, dibenzyl phthalates, chlorobutanes, and combinations thereof;
wherein the additively manufactured article comprises a build structure and a support structure;
wherein the build structure comprises a build composition comprising a polyetherimide; and
wherein the support structure comprises a support composition comprising a copolycarbonate comprising bisphenol isophorone carbonate units and bisphenol A carbonate units.

2. The method of claim 1, wherein the solvent is selected from the group consisting of mesitylene, benzyl benzoate, and combinations thereof.

3. The method of claim 1, wherein the solvent is benzyl benzoate.

4. The method of any one of claims 1-3, wherein the dissolution medium further comprises 0.2 to 2 weight percent of an anionic surfactant, based on the total weight of the dissolution medium.

5. The method of any one of claims 1-4, wherein the contacting is conducted for a time of 20 minutes to 10 hours and at a temperature of 20 to 70 °C.

6. The method of any one of claims 1-5, wherein the copolycarbonate comprises 50 to 65 mole percent bisphenol isophorone carbonate units, and 35 to 50 mole percent bisphenol A carbonate units, based on 100 mole percent total bisphenol isophorone carbonate units and bisphenol A carbonate units.

7. The method of any one of claims 1-5, wherein the support composition comprises, based on the total weight of the support composition, 55 to 80 weight percent of the copolycarbonate and further comprises 20 to 45 weight percent of a bisphenol A polycarbonate.

8. The method of claim 7, wherein the bisphenol A polycarbonate comprises a linear bisphenol A polycarbonate and a branched bisphenol A polycarbonate.

9. The method of any one of claims 1-5, wherein the support composition comprises, based on the total weight of the support composition, 55 to 79.5 weight percent of the copolycarbonate and further comprises 20 to 45 weight percent of a bisphenol A polycarbonate and 0.5 to 4.5 weight percent of a silicone having a kinematic viscosity of 600,000 to 20,000,000 centistokes at 25° C.

10. The method of any one of claims 1-9, wherein the build composition comprises, based on the total weight of the build composition, 40 to 70 weight percent of the polyetherimide and further comprises 30 to 60 weight percent of a polyestercarbonate.

11. The method of any one of claims 1-9, wherein the build composition comprises, based on the total weight of the build composition, 40 to 65 weight percent of the polyetherimide and further comprises 30 to 50 weight percent of a polyestercarbonate and 5 to 20 weight percent of a polycarbonate-polysiloxane.

12. The method of claim 1, wherein
the solvent is selected from the group consisting of mesitylene, benzyl benzoate, and combinations thereof;
the dissolution medium further comprises 0.2 to 2 weight percent of an anionic surfactant, based on the total weight of the dissolution medium;
contacting the additively manufactured article with the dissolution medium is conducted for a time of 20 minutes to 10 hours and at a temperature of 20 to 70 °C;
the copolycarbonate comprises 50 to 65 mole percent bisphenol isophorone carbonate units, and 35 to 50 mole percent bisphenol A carbonate units, based on 100 mole percent total bisphenol isophorone carbonate units and bisphenol A carbonate units;
the support composition comprises, based on the total weight of the support composition, 55 to 79.5 weight percent of the copolycarbonate and further comprises 20 to 45 weight percent of a bisphenol A polycarbonate and 0.5 to 4.5 weight percent of a silicone having a kinematic viscosity of 600,000 to 20,000,000 centistokes at 25° C; and
the build composition comprises, based on the total weight of the build composition, 40 to 70 weight percent of the polyetherimide and further comprises 30 to 60 weight percent of a polyestercarbonate.
